(19) Europäisches Patentamt
European Patent Office
Office européen des brevets

(11) **EP 3 143 190 B1**

(12) **EUROPEAN PATENT SPECIFICATION**

(45) Date of publication and mention of the grant of the patent:
**23.10.2019 Bulletin 2019/43**

(51) Int Cl.:
*D06F 58/20* (2006.01)    *D06F 58/28* (2006.01)

(21) Application number: **14724100.4**

(86) International application number:
**PCT/EP2014/060065**

(22) Date of filing: **16.05.2014**

(87) International publication number:
**WO 2015/172839 (19.11.2015 Gazette 2015/46)**

(54) **HEAT PUMP LAUNDRY DRYER**

WÄRMEPUMPENWÄSCHETROCKNER

SÈCHE-LINGE À POMPE À CHALEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.03.2017 Bulletin 2017/12**

(73) Proprietor: **Electrolux Appliances Aktiebolag 105 45 Stockholm (SE)**

(72) Inventors:
• **CAVARRETTA, Francesco**
  **I-33080 Porcia (PN) (IT)**
• **DALLA ROSA, Alessandro**
  **I-33080 Porcia (PN) (IT)**

(74) Representative: **Electrolux Group Patents AB Electrolux Group Patents 105 45 Stockholm (SE)**

(56) References cited:
**EP-A1- 2 412 868        EP-A1- 2 455 526**
**EP-A1- 2 586 905        EP-A1- 2 690 213**
**WO-A1-2013/144780**

**Description**

The present invention concerns the field of laundry drying techniques.

In particular, the present invention refers to a laundry dryer equipped with a heat pump system.

**BACKGROUND ART**

Laundry treating machines capable of carrying out a drying process on laundry, hereinafter simply indicated as laundry dryers, generally comprise a casing that houses a laundry container, like a rotating drum, where laundry to be treated is received. A closed air stream circuit carries out drying operation by circulating hot drying air, or process air, through the laundry container containing the wet laundry.

In laundry dryers, the heat pump technology is the most efficient way to save energy during drying operation. In conventional heat pump laundry dryers the process air stream flows in a close loop. The process air stream is moved by a fan, passes the laundry drum and removes water from wet clothes. The process air stream is cooled down and dehumidified and then heated up in the heat pump system and finally reinserted again into the laundry drum.

The heat pump system comprises a refrigerant flowing in a closed-loop refrigerant circuit constituted by a compressor, a condenser, an expansion device and an evaporator. The condenser heats up the process air while the evaporator cools and dehumidifies the process air leaving the drum. The refrigerant flows in the refrigerant circuit where it is compressed by the compressor, condensed in the condenser, expanded in the expansion device and then vaporized in the evaporator. The temperatures of the process air stream and the refrigerant are strongly correlated to each other.

One of the object for laundry dryers producers is to limit the overall size of the laundry dryers, in particular the size of the heat pump components (compressor, condenser, evaporator, etc.). A particular attention is posed on the size of the compressor. In heat pump laundry dryers of known type the heat pump system is typically confined in a small area in the basement of the same laundry dryer. The compressor, together with the other components, are therefore arranged at substantially the same level in the basement.

Compressors force and compress the refrigerant into an airtight chamber. Compressors typically used in heat pump system are rotary or scroll compressors, either hermetic or semihermetic. One of the relevant feature of the compressor is therefore the volume of the compressor chamber. The volume of the compressor chamber directly affects, therefore, the overall size of the compressor and of the laundry dryer.

Furthermore, particular attention is also posed on the optimization of the drying process, in particular in terms of energy efficiency and cycle time duration. The drying process efficiency is strictly linked to the working conditions of the heat pump system, in particular to the temperatures and pressures of the refrigerant in the refrigerant circuit.

WO 2013/144780 A1 discloses a laundry dryer having a heat pump system with a refrigerant circuit for a refrigerant like propane (R290). The heat pump system comprises a compressor which exhibits a displacement of 12 cc/rev or less, in particular 10.5 cc/rev or less.

EP 2 690 213 A1 discloses a laundry washer or washer/dryer with a heat pump system using a refrigerant which is a zeotropic blend.

EP 455 526 A1 discloses a laundry dryer with a heat pump system, wherein a compressor of the heat pump system is controlled to operate at a predetermined power input or below the predetermined power input dependent on a detected refrigerant temperature.

It is an object of the present invention to provide a heat pump laundry dryer which improves the efficiency of the drying process, in particular in terms of energy efficiency and cycle time duration.

It is another object of the present invention to provide a heat pump laundry dryer which limits the size of the heat pump components.

**DISCLOSURE OF INVENTION**

The applicant has found that by providing a laundry dryer of the type comprising a heat pump system having a refrigerant circuit for a refrigerant and comprising a process air circuit in communication with a laundry container suited for receiving laundry to be dried using process air, the refrigerant circuit comprising: a first heat exchanger for heating the process air and cooling the refrigerant, a second heat exchanger for cooling the process air and heating the refrigerant; a refrigerant expansion device arranged in the refrigerant circuit between the first heat exchanger and the second heat exchanger; and a compressor arranged in the refrigerant circuit between the second heat exchanger and the first heat exchanger, said compressor comprising a compressor chamber and a compressor inlet where the refrigerant is sucked for the compressor chamber, and by providing that the product of the volume of the compressor chamber and the refrigerant density at the compressor inlet is comprised between 40 $cm^3*kg/m^3$ and 250 $cm^3*kg/m^3$ when the heat pump system is in steady state condition, it is possible to obtain a laundry dryer which improves the efficiency of the drying process and limits the size of the heat pump components.

In a first aspect the present invention relates, therefore, to a laundry dryer of the type comprising a heat pump system having a refrigerant circuit for a refrigerant and comprising a process air circuit in communication with a laundry container suited for receiving laundry to be dried using process air, said refrigerant circuit comprising:

a central processing unit;

a refrigerant;

a first heat exchanger for heating said process air and cooling said refrigerant, said first heat exchanger comprising a heat exchanger outlet for expelling the heated process air for said laundry container;

a second heat exchanger for cooling said process air and heating said refrigerant; a refrigerant expansion device arranged in said refrigerant circuit between said first heat exchanger and said second heat exchanger; and

a rotary or a scroll compressor arranged in said refrigerant circuit between said second heat exchanger and said first heat exchanger, said compressor comprising a compressor chamber and a compressor inlet where said refrigerant is sucked for said compressor chamber,

said laundry dryer is characterised in that the product of the volume of said compressor chamber and the refrigerant density at said compressor inlet in steady state condition of said heat pump system is comprised between 40 cm$^3$*kg/m$^3$ and 250 cm$^3$*kg/m$^3$; wherein the refrigerant density is calculated using the refrigerant temperature detected at the compressor inlet and/or the refrigerant pressure detected at the compressor inlet and/or at the evaporator inlet; wherein the correlation between the refrigerant density (RDS) and the detected values are stored as a function or as a table in a memory of the central processing unit; and

wherein said steady state condition is a state condition reached by said heat pump system after a period of time from its activation when thermodynamic conditions are substantially stable over time. The product of the compressor chamber volume and the refrigerant density at the compressor inlet is preferably comprised between 60 cm$^3$*kg/m$^3$ and 250 cm$^3$*kg/m$^3$, more preferably comprised between 100 cm$^3$*kg/m$^3$ and 250 cm$^3$*kg/m$^3$.

In preferred embodiments of the invention, the compressor chamber volume is comprised between 4 cm$^3$ and 24 cm$^3$, preferably comprised between 5 cm$^3$ and 16 cm$^3$, more preferably comprised between 6 cm$^3$ and 14 cm$^3$.

Preferably, the refrigerant density at the compressor inlet in the steady state condition is comprised between 6 kg/m$^3$ and 40 kg/m$^3$, preferably comprised between 10 kg/m$^3$ and 25 kg/m$^3$.

The steady state condition is a state condition reached by the heat pump system after a period of time from its activation when thermodynamic conditions are substantially stable over time.

Preferably, in the steady state condition the refrigerant condensing temperature at said first heat exchanger is maintained within a range of 7,5°C around a target temperature, more preferably within a range of 5°C around a target temperature, and/or the refrigerant evaporation temperature at said second heat exchanger is maintained within a range of 7,5°C around a target temperature, more preferably within a range of 5°C around a target temperature, and/or the process air temperature at said first heat exchanger outlet is maintained within a range of 7,5°C around a target temperature, more preferably within a range of 5°C around a target temperature.

In a preferred embodiment of the invention, the target temperature for the process air temperature at said first heat exchanger outlet is set between 50°C and 70°C. In a further preferred embodiment of the invention, the target temperature for the refrigerant evaporation temperature at said second heat exchanger is set between 15°C and 25°C.

In a further preferred embodiment of the invention, the target temperature for the refrigerant condensation temperature at said first heat exchanger is set between 50°C and 70°C.

In a preferred embodiment of the invention, the process air circuit is a closed-loop process air circuit.

Preferably, the compressor of the invention is driven at a variable rotational speed.

In a preferred embodiment of the invention, the said steady state condition is obtained and/or maintained upon variation of the rotational speed of the compressor.

Preferably, the compressor is a rotary compressor, more preferably a rolling-piston compressor.

Preferably, the refrigerant used in the refrigerant circuit is a HydroFluoroHolefin (HFOs) or a hydrocarbon (HC). More preferably, the refrigerant is R290 or R441a.

According to a preferred embodiment of the invention, the heat pump system further comprises a cooling fan unit for the compressor. Preferably, the cooling fan unit is activated at said steady state condition.

In a preferred embodiment of the invention, the said steady state condition is obtained and/or maintained upon activation of said cooling fan unit.

In a further preferred embodiment of the invention, the compressor is designed to guarantee a sufficient heat exchange with the surrounding air so that said steady state condition is maintained.

In a preferred embodiment of the invention, said first and/or said second heat exchanger further comprises a heat exchanger module, said module including:

- an inlet header to direct a flow of the refrigerant into the module;
- an outlet header to discharge the refrigerant from the module; and
- a plurality of heat exchange layers fluidly connecting the inlet to the outlet header to enable the refrigerant to flow from the inlet to the outlet header and/or vice versa; the layers being stacked one above the others in a predetermined stacking direction and each layer including a plurality of channels.

Preferably, the heat exchange layers are substantially parallel one to the others. More preferably, the channels of the plurality are substantially parallel one to the others.

In a preferred embodiment of the invention, the heat exchange layers include a single tube.

Said channels have a hydraulic diameter smaller or equal than 5 mm, preferably smaller or equal than 3 mm, more preferably smaller or equal than 1 mm.

## BRIEF DESCRIPTION OF THE DRAWINGS

These and other features and advantages of the present invention will be made clearer by reading the following detailed description of exemplary and non-limitative embodiments thereof, referring to the following drawing figures, wherein:

- Figure 1 shows a perspective view of a laundry dryer with a heat pump system according to a preferred embodiment of the invention;
- Figure 2 illustrates a schematic diagram of the laundry drying machine of Figure 1;
- Figures 3 and 4 show cross-sectional views of a rolling piston compressor;
- Figure 5 shows a cross-sectional view of a compressor usable in the heat pump system of a laundry drying machine according to a preferred embodiment of the invention;
- Figure 6 illustrates a schematic diagram of the refrigerant temperature at a condenser outlet and of the refrigerant temperature at an evaporator inlet as a function of the time in a laundry dryer with a heat pump system according to the preferred embodiment of the present invention;
- Figure 7 illustrates a schematic diagram of the process air temperature as a function of the time at the condenser outlet in a laundry dryer with a heat pump system according to the preferred embodiment of the present invention;
- Figure 8 is a perspective view of a portion of an embodiment of the laundry drying machine of Figure 1 with the casing removed;
- Figures 9a and 9b are a schematic front view and top view, respectively, of an embodiment of the heat exchanger module of the laundry drying machine of figures 1 or 2;
- Figures 10a and 10b are a schematic front view and top view, respectively, of a further additional embodiment heat exchanger module of the laundry drying machine of figures 1 or 2;
- Figure 11 is a cross-sectional view of an element of the detail of fig. 8;
- Figure 12 is a perspective view in section of an element of figure 8.

## DETAILED DESCRIPTION OF THE INVENTION

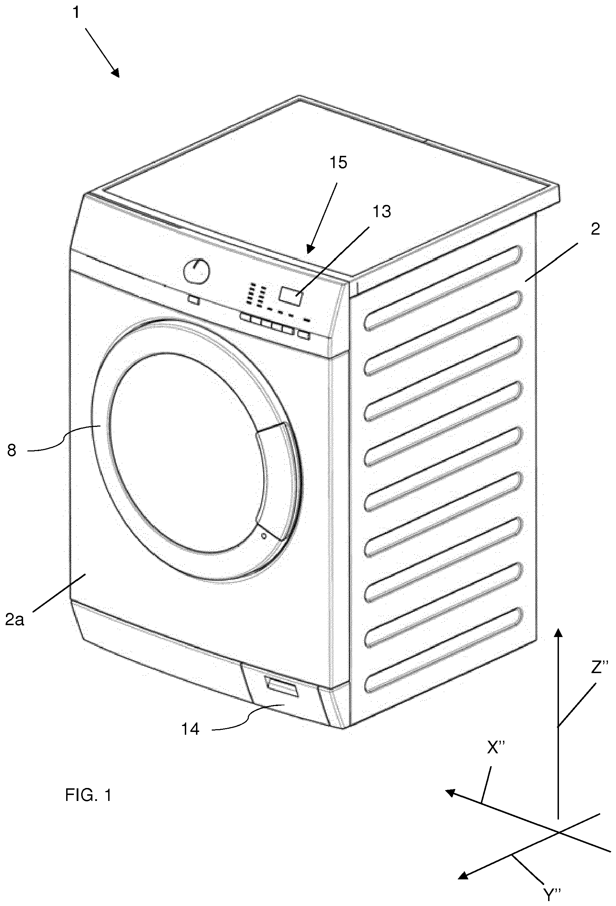

Figure 1 shows a laundry dryer 1 according to an embodiment of the present invention. It is pointed out that the present invention has proved to be particularly successful when applied to a front-loading laundry dryer with a rotatable laundry container; however it is clear that the present invention can be applied as well to a top-loading laundry dryer.

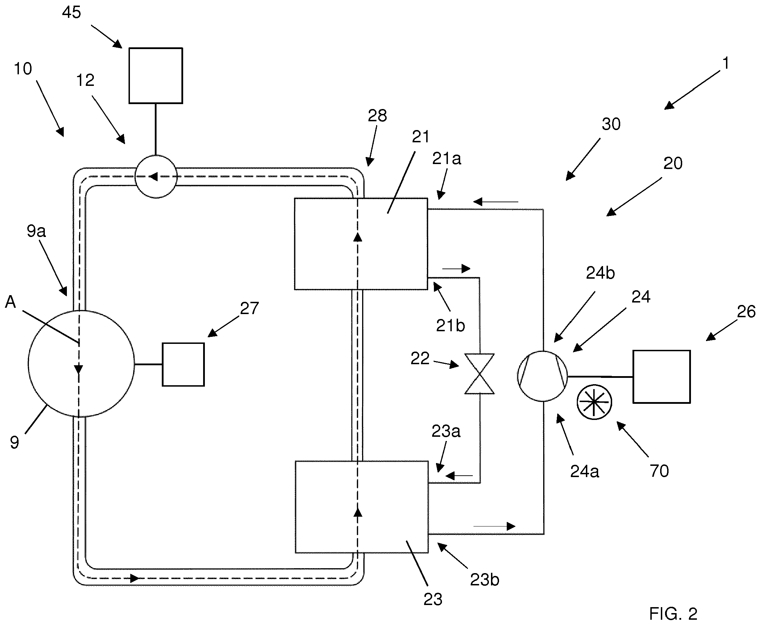

Figures 1 and 2 illustrate a laundry dryer 1 with a heat pump system 20 according to a preferred embodiment of the present invention.

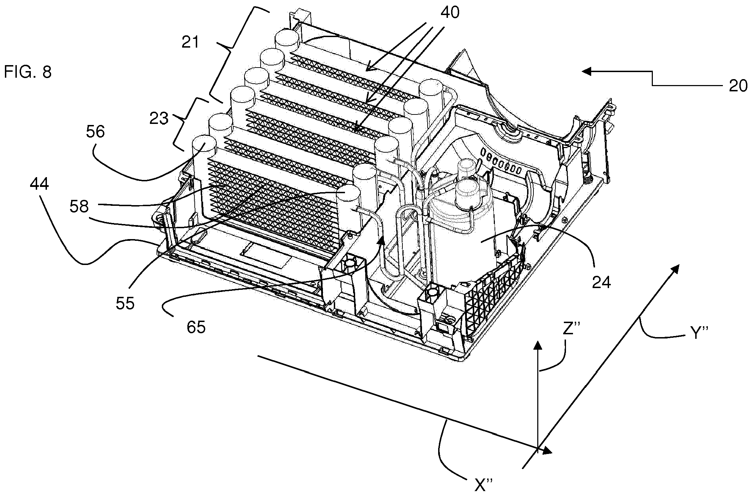

The laundry dryer 1 preferably comprises, though not necessarily, a substantially parallelepiped-shaped outer boxlike casing 2 which is preferably structured for resting on the floor. More in detail, casing 2 generally includes a basement 44, visible in Figure 8, where various components of the laundry dryer 1 are arranged. The laundry dryer 1 defines an horizontal plane (X", Y") which is substantially the plane of the ground on which the laundry dryer 1 is situated, and a vertical direction Z" perpendicular to the plane (X", Y").

A laundry container comprising a rotatably drum 9 is provided within the casing 2. A front door 8, pivotally coupled to the front upright side wall 2a, is provided for allowing access to the drum interior region to place laundry to be dried therein.

The drum 9 is advantageously rotated by a drum motor 27, preferably an electric motor, which preferably transmits the rotating motion to the shaft of the drum 9, advantageously by means of a belt/pulley system. In a different embodiment of the invention, the drum motor can be directly associated with the shaft of the drum 9.

The laundry dryer 1 is provided with a process air circuit 10, as illustrated in Figure 2, which is structured to circulate inside the drum 9 drying air A, or process air, as schematically illustrated with dashed line in Figure 2.

The process air A passes through a drum inlet 9a and circulates over and through the laundry located inside the drum 9 to dry the laundry.

The process air circuit 10 is also structured for drawing moist air from the drum 9 and cooling down the moist air leaving the drum 9 so to extract and retain the surplus moisture. The dehumidified air is then heated up to a predetermined temperature preferably higher than that of the moist air arriving from the drum 9. Finally the heated, dehumidified air is conveyed again into the drum 9, where it flows over and through the laundry stored inside the rotatable drum 9 to rapidly dry the laundry, as said above.

The process air circuit 10 forms, therefore, a closed-loop for the process air A. Laundry dryer 1 with process air A forming a closed-loop belongs to laundry dryers known as condense laundry dryers.

An air conveyance device 12 is preferably arranged along the process air circuit 10 for generating the volume flow of process air A.

The air conveyance device 12 preferably comprises a fan. In a preferred embodiment of the invention, the fan 12 comprises an electric motor 45.

In further preferred embodiments, the fan 12 and the drum 9 may be preferably driven by the same electric motor. This may advantageously reduce the cost and/or the size of the laundry dryer. On the contrary, two electric motors 27, 45, as described above, may be advantageously driven and controlled independently so that the fan 12 and the drum 9 may be controlled independently.

The air conveyance device 12 is preferably arranged upstream of the drum 9. In different embodiments, nevertheless, the air conveyance device 12 may be arranged in any place along the process air circuit 10.

Preferably, and more particularly, the process air circuit 10 comprises a dehumidifying unit 23 arranged downstream of the drum 9 and a heater unit 21 arranged downstream of the dehumidifying unit 23 and upstream of the drum 9. It is underlined that in the present application the terms "upstream" and "downstream" are referred to the flowing direction of the air, heated air and/or moist air, during the standard functioning of the laundry dryer; for example saying that the fan is arranged upstream of the drum means that in the standard functioning of the laundry dryer the air firstly passes through the fan and then flows into the drum; saying that the dehumidifying unit is arranged downstream of the drum means that in the standard functioning of the laundry dryer the air firstly circulates inside the drum and then passes through the dehumidifying unit. In the dehumidifying unit 23 the moist air leaving the drum 9 condenses and cools down and the water generated therein is preferably collected in a removable water container 14, visible in Figure 1, arranged below the dehumidifying unit 23.

In the preferred embodiment here described, the dehumidifying unit 23 is the evaporator of the heat pump system 20 and the heating unit 21 is the condenser of said heat pump system 20.

Therefore, the evaporator 23 cools down and dehumidifies the moist process air A coming from the drum 9 and then the condenser 21 heats up the dehumidified process air coming from the evaporator 23. The heated process air A is then conveyed again into the drum 9, thus forming said closed-loop process air A.

In further embodiments, the process air circuit may not form a closed-loop. In this case, for example, the process air may be conveyed to a condenser from outside, then conveyed into the drum, from the drum conveyed to the evaporator and finally expelled to the outside (as happens in laundry dryers known as vented laundry dryers).

The heat pump system 20 with its evaporator 23 and condenser 21, therefore, interacts with the process air circuit 10. In fact, the process air circuit 10 and the heat pump system 20 are thermally coupled by the condenser 21 and the evaporator 23.

In particular, the heat pump system 20 comprises a refrigerant circuit 30 forming a closed-loop circuit where a refrigerant R flows.

The refrigerant circuit 30 comprises a compressor 24, a first heat exchanger 21, i.e. the condenser 21 in the preferred embodiment here described, an expansion device 22 and a second heat exchanger 23, i.e. the evaporator 23 in the preferred embodiment here described. The compressor 24, the condenser 21, the expansion device 22 and the evaporator 23 are connected in series to form said closed-loop refrigerant circuit 30.

In the following the heat exchangers are named either condenser and evaporator or first and second heat exchanger, respectively.

The refrigerant R flows in the refrigerant circuit 30: the refrigerant R coming from the evaporator outlet 23b is conveyed to the compressor inlet 24a, enters the compressor 24 where it is compressed and then it is discharged through a compressor outlet 24b towards the condenser inlet 21a; the refrigerant R is then discharged through a condenser outlet 21b towards the expansion device 22 and from the expansion device 22 it is conveyed again to the evaporator 23 through an evaporator inlet 23a.

In particular, the refrigerant R condenses at the condenser 21 and evaporates at the evaporator 23.

Generally, the first heat exchanger 21 defines a thermal coupling between the process air circuit 10 and the refrigerant circuit 30 wherein the temperature of the process air A increases (heating) and the temperature of the refrigerant R decreases (cooling). The heated process air A at the first heat exchanger outlet 28, or condenser outlet 28, is then conveyed to the drum inlet 9a and hence into the drum 9. The temperature of the process air A at the condenser outlet 28 is substantially equal to the temperature of the process air A at the drum inlet 9a. Analogously, the second heat exchanger 23 defines a further thermal coupling between the process air circuit 10 and the refrigerant circuit 30 wherein the temperature of the process air A decreases (cooling) and the temperature of the refrigerant R increases (heating).

A compressor control unit 26 is also preferably provided for controlling the compressor 24. In particular, the compressor control unit 26 is provided for controlling the rotational speed Cs of the compressor 24. The compressor control unit 26 for controlling the rotational speed Cs of the compressor 24 can be part of a central processing unit, not illustrated.

The compressor 24 may be rotated at a fixed rotational speed or, in different preferred embodiments, it may be driven at a variable rotational speed.

It should to be noted that with rotational speed Cs of the compressor 24 it is meant the rotational speed of a driving motor which is part of the compressor 24. In a preferred embodiment of the invention, the compressor 24 comprises an electric motor and the compressor control unit 26 comprises an inverter, which is advantageously used when a variable rotational speed is required.

The electric motor of compressors, as known, comprises windings formed by wires that are laid in coils, typically wrapped around a portion of the stator included in the electric motor. In a preferred embodiment of the invention, the wires are made of aluminium.

A cooling fan unit 70 or blower unit is preferably arranged close to the compressor 24 to remove heat from the compressor 24, i.e. from the heat pump system 20, during a drying operation. The cooling air flow, which is an ambient air flow in the embodiment, is actively driven by the cooling fan unit 70 and is taking heat from (the surface of) the compressor 24. The fan unit 70 comprises a blower or fan which is driven by a fan motor controlled by the central processing unit of the laundry dryer 1.

In further preferred embodiments, nevertheless, the cooling fan unit may be absent.

An interface unit 15 is preferably arranged on the top of the casing 2. The interface unit 15 is preferably accessible to the user for the selection of the drying cycle and insertion of other parameters, for example the type of fabric of the load, the degree of dryness, etc.. The interface unit 15 preferably displays machine working conditions, such as the remaining cycle time, alarm signals, etc. For this purpose the interface unit 15 preferably comprises a display 13.

In further embodiments, the interface unit may be differently realized, for example remotely arranged in case of a remote-control system.

Further, the laundry dryer 1 may comprise several kinds of sensor elements, which are not shown in the figures. For example, the sensor elements may be provided for detecting the temperature (thermocouple), the relative humidity of the process air A and/or the electrical impedance at suitable positions of the laundry dryer 1, the pressure and/or the temperature of the refrigerant, etc..

The central processing unit above mentioned is advantageously connected to the various parts of the laundry dryer 1, or peripheral units or sensor elements, in order to ensure its operation.

The compressor 24 used in the heat pump system 20 according to the present invention preferably comprises a rotary compressor or a scroll compressor.

The refrigerant R is conveyed in a compression chamber and therein compressed by movement of compressor's mechanism.

An important feature of the compressor is therefore the volume Vd of said compressor chamber. The volume Vd of the compressor chamber is expressed in cubic centimetre (cc).

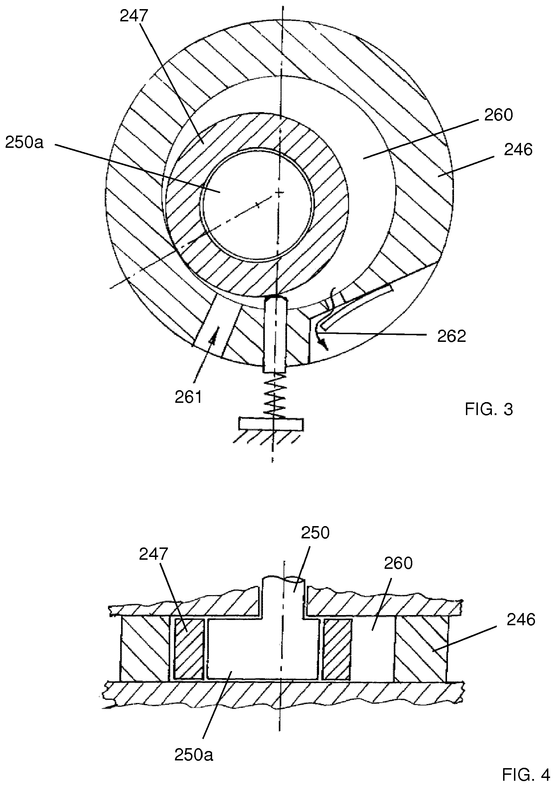

A rotary compressor preferably utilized in said heat pump system 20 is a rolling-piston, or fixed-vane, rotary compressor. As schematically shown in Figures 3 and 4, a rolling-piston type rotary compressor comprises a cylinder 246 and a roller 247, o roller piston, mounted on a shaft 250 having an eccentric 250a. The shaft 250 rotates about the center of the cylinder 246 and the roller 247 rolls over the inside surface of the cylinder 246, thereby rotating about the eccentric 250a. A compression chamber 260 is defined between the roller piston 247 and the cylinder 246. The refrigerant R is conveyed to the compressor chamber 260 through an inlet port 261 and then discharged, after its compression, through a discharged port 262.

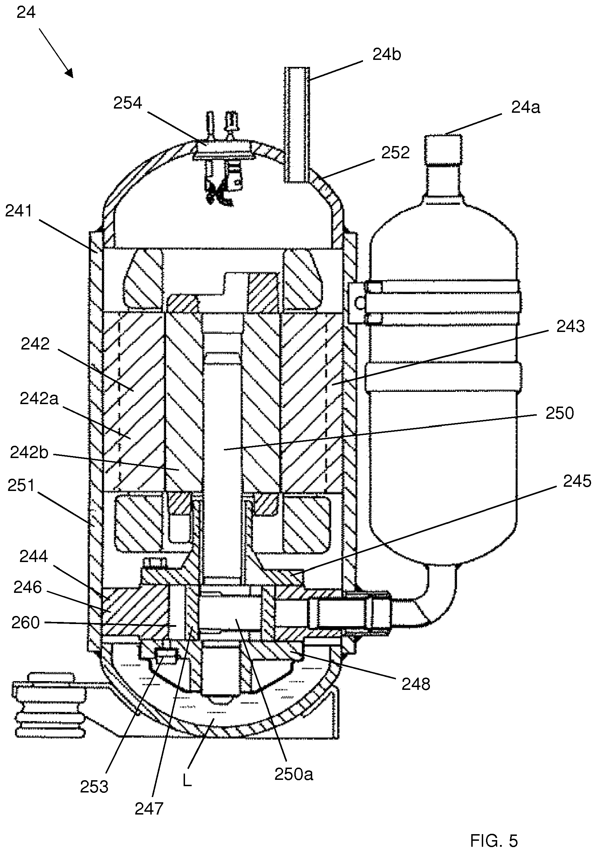

A rolling-piston compressor according to a preferred embodiment of the invention will be better described later with reference to Figure 5.

Another compressor preferably utilized in said heat pump system 20 is a scroll compressor. A scroll compressor uses two interleaving scrolls to compress the refrigerant R. Typically, one of the scrolls is fixed, while the other orbits eccentrically without rotating, thereby trapping and compressing pockets of refrigerant between the scrolls. Another method for producing the compression motion is co-rotating the scrolls, in synchronous motion, but with offset centers of rotation.

Figure 5 illustrates a preferred embodiment of a compressor 24 usable in the heat pump system 20 according to the present invention.

The compressor 24 is a rotary compressor, more particularly a rolling-piston compressor.

The compressor 24 comprises sealed container 241, a motor portion 242 in the upper portion of the sealed container 241, and a compression mechanism 244 driven by the motor portion 242. Lubricating oil L to lubricate the compression mechanism 244 is received in the lower portion of the sealed container 241.

The motor portion 242 comprises a stator 242a which is press-fitted in the upper portion of the sealed container 241 and which has several refrigerant paths 243 on the outer periphery, and a rotor 242b which is rotated by the stator 242a. The rotor 242b is provided with a rotary shaft 250 integral therewith. The rotary shaft 250 extends downward from the rotor 242b, and is rotatably supported by a main bearing 245 and a sub bearing 248 of the compression mechanism 244. The sub bearing 248 is provided with a valve gear 253 for discharging a refrigerant gas compressed in the compression mechanism 244 into the sealed container 241. The compression mechanism 244 comprises a cylinder 246, and a piston roller 247 is contained in the cylinder 246. The volume between the cylinder 246 and the piston roller 247 defines the compression chamber 260. The piston roller 247 is mounted to a crank portion 250a of the rotary shaft 250, and eccentrically rotated in accordance with the rotation of the rotary shaft 250. The compression mechanism 244 is immovably-supported in the sealed container 241, having the cylinder 246 welded to the inner periphery of the sealed container 241.

The sealed container 241 comprises a cylindrical container 251 sealed at its one end, and a substantially spherical upper lid 252, welded to the cylindrical container 251 over the entire circumference to cover the container. A glass terminal 254 is attached to the vicinity of the centre of the upper lid 252, and a discharge tube 24b (or compressor outlet) is attached to the spherical surface of the upper lid 252.

With the structure explained above, when the compressor is operated, by rotation of the rotary shaft 250 caused by the rotor 242b, the piston roller 247 eccentrically rotates in the cylinder 246, and the refrigerant gas R coming from the compressor inlet 24a is compressed in the compression chamber 260 of the compression mechanism 244 and discharged into the sealed container 241 via the valve gear 253. At this point, lubricating oil L leaks into the compression mechanism 244, therefore, droplets of lubricating oil L are discharged together with the compressed refrigerant R. These droplets of lubricating oil L flow into the upper space of the motor portion 242 via several refrigerant paths 243 provided around the outer periphery of the stator 242a, and are separated from the refrigerant gas R when the droplets collide with and adhere to the inner surface of the upper lid 252. The separated lubricating oil L is carried upward by the flow of the refrigerant gas R along the inner surface of the upper lid 252. Here, as the inner surface of the upper lid 252 is formed to be substantially spherical, the separated lubricating oil L is gradually collected in the centre. The collected lubricating oil L collides with the glass terminal 254 provided around the center of the upper lid 252, and falls onto the lower portion of the sealed container 241 due to its weight. Part of the lubricating oil L flowing along the inner surface of the upper lid 252 may be discharged to the outside of the compressor 24 through the compressor outlet 24b (discharge tube).

It has to be noted that the compressed refrigerant R expelled from the compression mechanism 244 which flows into the upper space of the motor portion 242 via refrigerant paths 243 also cools down the motor portion 242 of the compressor, in particular the stator 242a.

The operation of the laundry dryer 1 with the heat pump system 20 comprises two phases, namely a warm-up phase and a steady state phase. The warm-up phase is the initial phase after compressor 24 has been switched on, wherein a certain time is need to reach full working condition in terms of temperatures and pressures of the refrigerant R and/or of temperatures of the process air A.

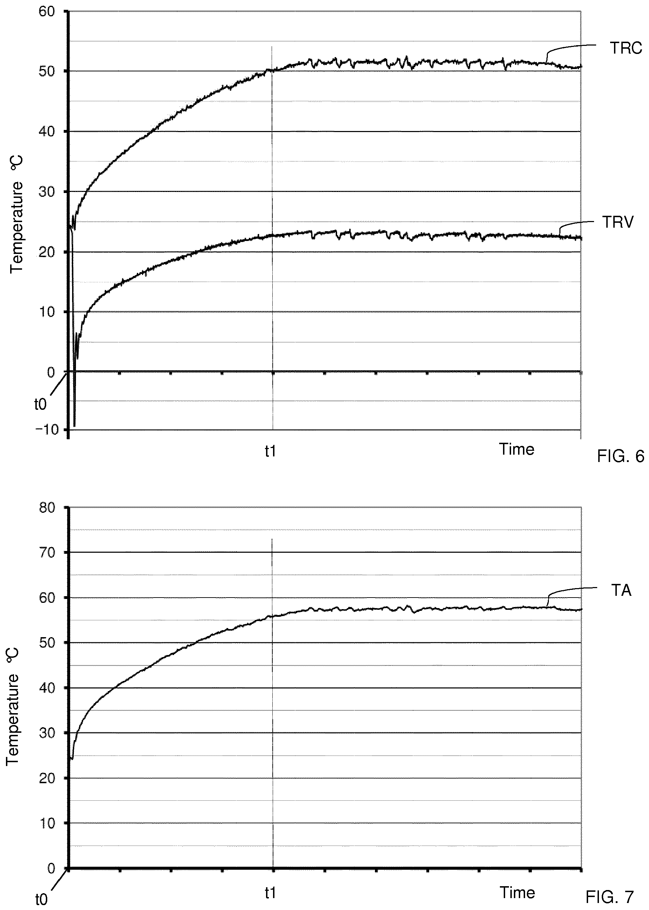

The two phases are better explained referring to figures 6 and 7. Figure 6 shows the refrigerant temperature TRC at the condenser outlet 21b and the refrigerant temperature TRV at the evaporator inlet 23a as a function of the time while Figure 7 shows the process air temperature TA at the condenser outlet 28 as a function of the time. The process air temperature TA substantially corresponds the process air temperature TA at the drum inlet 9a.

When the heat pump system starts (time t0=0 in the figures), the temperatures of the refrigerant R and of the process air A are at ambient temperature. During the warm-up phase (from time t0 to time t1 in the figures), the temperatures of the refrigerant R and of the process air A increase up to a respective working level (at time t1). In the successive steady state phase (i.e. time t>t1 in the figures), or steady state condition, the temperatures of the refrigerant R and of the process air A remain quiet constant about said respective working level.

During the steady state condition, furthermore, the temperatures of the components of heat pump system 20 (i.e. the condenser 21, the evaporator 23, the compressor 24, etc.) remain stable, or substantially stable.

In a preferred embodiment, in particular in the heat pump system 20 above described and illustrated in figure 2, the steady state condition is preferably obtained and/or maintained by activating the cooling fan unit 70 which extracts heat from the compressor 24 and/or controlling/varying the rotational speed of the compressor 24.

Advantageously, therefore, the temperature of the compressor 24 is maintained stable, or substantially stable, by activating continuously or intermittently the cooling fan unit 70 which extracts heat from the compressor 24 and/or increasing/decreasing the rotational speed of the compressor 24 thus controlling/limiting its temperature.

The steady state condition preferably starts (time t1) substantially when, or just after, the cooling fan unit 70 is activated and/or when, or just after, the rotational speed of the compressor 24 is varied. Preferably, therefore, the steady state condition is obtained and/or maintained upon activation of the cooling fan unit 70 and/or upon variation of the rotational speed of the compressor 24.

In further preferred embodiments, nevertheless, during the warm-up phase the temperatures of the refrigerant R and of the process air A increase up to a respective working level and in the successive steady state condition, i.e. when the temperatures of the refrigerant R and of the process air A remain quiet constant about said respective working level, the temperatures of the components of heat pump system 20 (i.e. the condenser 21, the evaporator 23, the compressor 24, etc.) remain stable, or substantially stable, without any further actions of the type above mentioned (i.e. activation of the cooling fan unit and/or control of the rotational speed of the compressor). In this case, the heat pump system may not comprise a cooling fan unit and/or the compressor may be rotated at a fixed rotational speed. In this preferred embodiment, the compressor 24 is preferably designed to guarantee a sufficient heat extraction (heat exchange) from the compressor 24 to the surrounding air, in particular a sufficient heat exchange between the compressor container/casing and the surrounding air. The compressor is eventually designed to guarantee a sufficient heat exchange with the surrounding air so that said steady state condition is maintained.

For example, with reference to figure 6, during the warm-up phase (t0÷t1) the refrigerant temperature TRC at the condenser outlet 21b from ambient temperature (about 25°C) increases up to a working level, or target temperature (about 50°C). During the steady state phase (time t>tl), the refrigerant temperature TRC at the condenser outlet 21b remains quiet constant at said target temperature (about 50°C). Preferably, said refrigerant temperature TRC at the condenser outlet 21b is maintained within a range of 7,5°C around said target temperature (for example in the range comprised between 42,5°C and 57,5°C), more preferably within a range of 5°C around said target temperature (for example in the range comprised between 45°C and 55°C).

Preferably, the target temperature for the refrigerant R at the condenser outlet 21b during the steady state phase (time t>t1) is set between 50°C and 70°C.

During the warm-up phase (t0÷t1), the course of the refrigerant temperature TRV at the evaporator inlet 23a is different from the refrigerant temperature TRC at the condenser outlet 21b. At time t0=0 when the compressor 24 is switched on, the refrigerant temperature TRC at the evaporator inlet 23a from ambient temperature (about 25°C) drastically decreases to a low value (about -10°C). During the warm-up phase (t0÷t1) the refrigerant temperature TRV at the evaporator inlet 23a from the low value (about -10°C) increases up to a working level, or target temperature (about 22°C).

During the steady state phase (time t>t1), the refrigerant temperature TRV at the evaporator inlet 23a remains quiet constant at said target temperature (about 22°C). Preferably, said refrigerant temperature TRV at the evaporator inlet 23a is maintained within a range of 7,5°C around said target temperature (for example in the range comprised between 14,5°C and 29,5°C), more preferably within a range of 5°C around said target temperature (for example in the range comprised between 17°C and 27°C).

Preferably, the target temperature for the refrigerant R at the evaporator inlet 23 during the steady state phase (time t>t1) is set between 15°C and 25°C.

Analogously, during the warm-up phase (t0÷t1) the process air temperature TA at the condenser outlet 28 from ambient temperature (about 25°C) increases up to a working level, or target temperature (about 57°C). During the steady state phase (time t>t1), the process air temperature TA at the condenser outlet 28 remains quiet constant at a target temperature (about 57°C). Preferably, said process air temperature TA at the condenser outlet 28 is maintained within a range of 7,5°C around said target temperature (for example in the range comprised between 49,5°C and 64,5°C), more preferably within a range of 5°C around said target temperature (for example in the range comprised between 52°C and 62°C). Preferably, the target temperature for the process air A at the condenser outlet 28 during the steady state phase (time t>t1) is set between 50°C and 70°C.

At the steady state phase (time t>t1), as said above, the cooling fan unit 70 is also preferably activated.

It has to be noted that in the figures we referred to the refrigerant temperature TRC at the condenser outlet 21b and to the refrigerant temperature TRV at the evaporator inlet 23a. Nevertheless, preferably, we may refer to the refrigerant condensing temperature TC at the condenser 21 and to the refrigerant evaporation temperature TV at the evaporator 23. The values of the refrigerant condensing temperature TC at the condenser 21 and of the refrigerant evaporation temperature TV at the evaporator 23 substantially correspond to the refrigerant temperature TRC at the condenser outlet 21b and to the refrigerant temperature TRV at the evaporator inlet 23a, respectively.

From the above, the steady state condition may be defined as a state condition reached by the heat pump system 20 after a period of time (t1-t0) from its activation (at time t=t0).

In said state condition the refrigerant temperature TRC at the condenser outlet 21b (or the refrigerant condensing temperature TC at the condenser 21) and/or the refrigerant temperature TRV at the evaporator inlet 23a (or the refrigerant evaporation temperature TV at the evaporator 23) and/or the process air temperature TA at the condenser outlet 28 is preferably maintained within a range of 7,5°C around said target temperature, more preferably within a range of 5°C around said target temperature.

Furthermore, during the steady state phase, i.e. when the thermodynamic conditions are substantially stable over time, the density RD of the refrigerant R at the compressor inlet 24a also reaches a substantially stable value RDS. Such value of refrigerant density RDS may be calculated, or estimated, by using one or more parameters which are detected in preferred points of the heat pump system 20. For example, the refrigerant density RDS is calculated using the refrigerant temperature detected at the compressor inlet 24a, for example by means of thermocouple, and/or the refrigerant pressure detected at the compressor inlet 24a and/or at the evaporator inlet 23a.

The correlation between the refrigerant density RDS and the detected values is stored as a function or as a table in a memory of the central processing unit.

The applicant has found that a heat pump system wherein, in said steady state condition, the product of the volume Vd of the compressor chamber 260 and the refrigerant density RDS at the compressor inlet 24a is preferably comprised between 40 $cm^3$*$kg/m^3$ and 250 $cm^3$*$kg/m^3$, improves the efficiency of the drying process, in particular in terms of energy efficiency and cycle time duration, and limits the size of the heat pump components.

The value of the compressor chamber volume Vd is expressed in $cm^3$ and the refrigerant density RDS is expressed in $kg/m^3$.

Preferably, in said steady state condition the product of the compressor chamber volume Vd and the refrigerant density RDS at the compressor inlet 24a is comprised between 60 $cm^3$*$kg/m^3$ and 250 $cm^3$*$kg/m^3$.

More preferably, in said steady state condition the product of the compressor chamber volume Vd and the refrigerant density RDS at the compressor inlet 24a is comprised between 100 $cm^3$*$kg/m^3$ and 250 $cm^3$*$kg/m^3$.

In preferred embodiments, the compressor chamber volume Vd is comprised between 4 $cm^3$ and 24 $cm^3$.

Preferably, the compressor chamber volume Vd is comprised between 5 cm$^3$ and 16 cm$^3$.

More preferably, the compressor chamber volume Vd is comprised between 6 cm$^3$ and 14 cm$^3$.

In preferred embodiments, then, the refrigerant R is chosen so that its refrigerant density RDS at the compressor inlet 24a in said steady state condition is comprised between 6 kg/m$^3$ and 40 kg/m$^3$.

Preferably, the refrigerant R is chosen so that its refrigerant density RDS at the compressor inlet 24a in said steady state condition is comprised between 10 kg/m$^3$ and 25 kg/m$^3$.

Advantageously, a compressor 24 and a refrigerant R wherein, in steady state condition, the product of the compressor chamber volume Vd and the refrigerant density RDS at the compressor inlet 24a is comprised in said ranges guarantee the optimal match between the compressor chamber volume Vd and the refrigerant thermo physical properties.

If follows that an optimal match is also guarantee between the compressor size and the energy efficiency of the heat pump system 20.

In particular, the compressor chamber volume Vd and the refrigerant density RDS according to the invention determine a mass flow rate of the refrigerant R in the refrigerant circuit 30 which is maintained in an optimal range, i.e. between high and low thresholds. In other words, the mass flow rate of the refrigerant R does not go beyond a high threshold, thus avoiding that the system efficiency is jeopardized, due to the constraints about the maximum process air flow rates and the constraints of volume in the basement for placing the components (in particular the heat exchangers). Also, the mass flow rate of the refrigerant R does not go below a low threshold, thus avoiding that the heat transfer capability at the heat exchangers is negatively affected. A reduced heat transfer capability will cause the drying process lasting longer than desired.

Preferably, the refrigerant R used in the refrigerant circuit 30 of the heat pump system 20 according to the present invention may be a HydroFluoroHolefin (HFOs) or a hydrocarbon (HC), such as R290 or R441a.

Figure 8 shows in details the heat pump system 20 according to a preferred embodiment of the invention. The heat pump system 20 connects via piping 65 the first heat exchanger 23 (condenser), the expansion device 22 such as a choke, a valve or a capillary tube (not visible), the second heat exchanger 23 (evaporator) and the compressor 24. Preferably, said components of the heat pump system 20 are confined in a small area in the basement 44. The components are arranged at substantially the same level with respect to the plane of the ground (X", Y").

Preferably, in correspondence of evaporator 23, the laundry dryer 1 of the invention preferably comprises the removable water container 14 (shown only in fig. 1) which collects the condensed water produced, when the laundry dryer 1 is in operation, inside evaporator 23 by condensation of the surplus moisture in the drying air A arriving from the drum 9. The water container 14 is located at the bottom of the evaporator 23. Preferably, through a connecting pipe and a pump (not shown in the drawings), the collected condensed water is sent in a reservoir located in correspondence of the highest portion of the laundry dryer 1 so as to facilitate manual discharge of the water by the user.

First and/or second heat exchanger 21, 23 will be described hereinafter.

First and/or second heat exchanger 21, 23 include one or more heat exchanger modules 40 located along the process air A path.

With reference to Figure 8, the basement 44 of a laundry dryer 1 showing a plurality of modules 40 included in the evaporator 23 and in the condenser 21 of the heat pump system 20 according to the invention is depicted. In figure 8, the casing 2 and the drum 9 of the laundry dryer 1 have been removed in order to show the heat exchangers 21, 23 located along the process air A path. As stated above, although in the appended drawings both evaporator 23 and condenser 21 of the laundry dryer 1 includes heat exchanger modules 40 realized according to the invention, it is to be understood that the evaporator 23 only or the condenser 21 only might include such module(s) 40. In addition, a single module 40 can be included in either evaporator 23 or condenser 21. Moreover, in case both evaporator and condenser include more than one module 40 according to the invention, the evaporator can include a different number of modules from the condenser (as per the appended figure 8 where the evaporator 23 includes two modules 40 and the condenser four modules 40).

Preferably, the condenser 21 includes more modules than the evaporator 23. In case more than one module 40 is included in the laundry dryer 1 of the invention, the modules can be identical or different.

Preferably, modules 40 are located in correspondence of the basement 44 of laundry dryer 1.

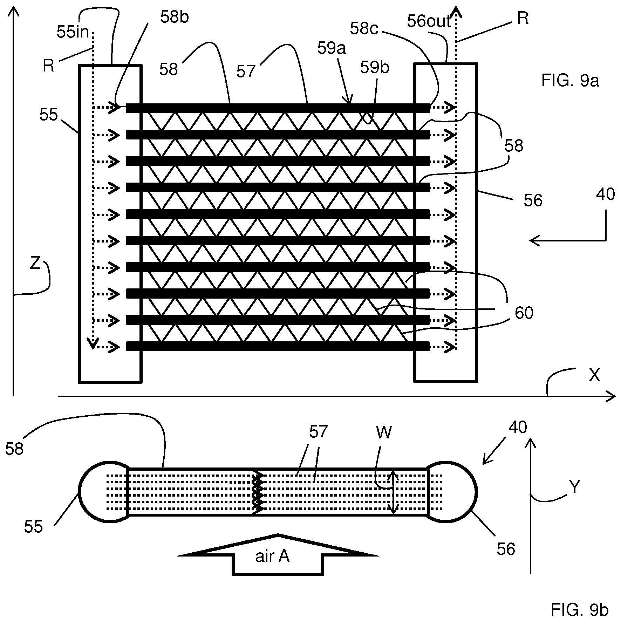

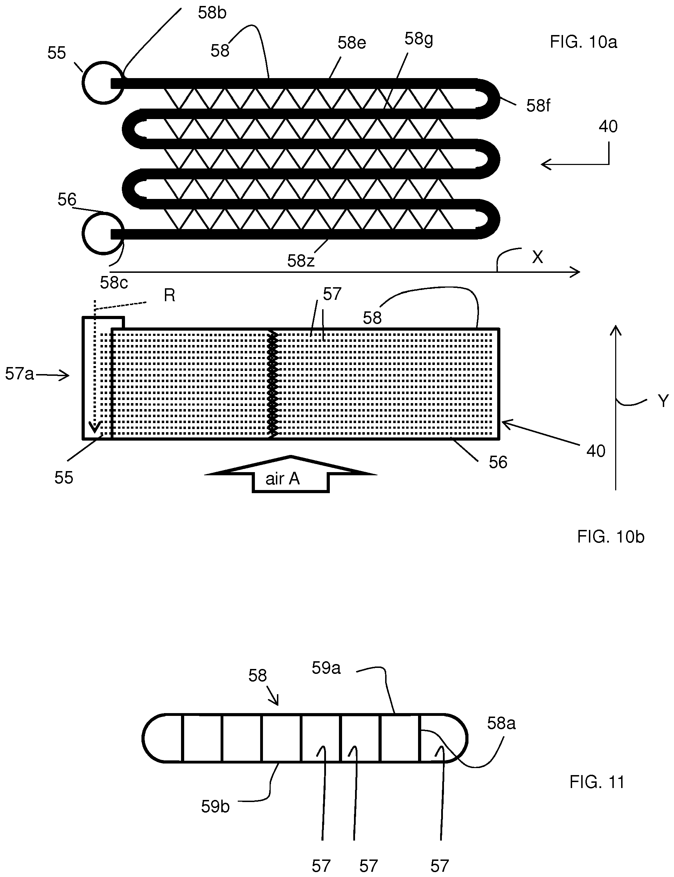

The structure of a single module 40 will now be described with reference to two different embodiments depicted in figures 9a-9b and 10a-10b.

A heat exchanger module 40 includes an inlet header 55 and an outlet header 56. Inlet and outlet headers 55, 56 have preferably the structure of a pipe and more preferably with a circular cross section. The headers have a longitudinal extension along an axis, which corresponds to the main direction of flow of the refrigerant R within the headers. The refrigerant R is flowing into the module 40 via the inlet header 55 and exiting the same via the outlet header 56. A plurality of channels, each indicated with 57, fluidly connect the inlet 55 to the outlet header 56 and vice versa, so that the refrigerant R can enter and exit the module 40. The channels 57, due to their configuration, allow good heat exchange between the refrigerant R and the process air A.

Channel 57 defines a longitudinal direction X along which it extends. Preferably, the channels 57 are mounted in the module 40 so that their longitudinal extension X is substantially perpendicular to a process air A flow direction Y. Preferably, their longitudinal extension is substantially parallel to the horizontal plane. In other words preferably, when mounted, the longitudinal direction X lies on a plane parallel to the (X", Y") plane defined by the laundry dryer 1.

Preferably, the refrigerant flow within channels 57 is substantially perpendicular to the process air A flow. However, depending on the direction of the process air A flow, the direction of the process air stream and the direction of the refrigerant flow can alternatively form an angle therebetween.

According to a preferred embodiment, the channels 57 are grouped in heat exchange layers 58: each heat exchange layer 58 includes a plurality of channels 57 which are preferably adjacent and parallel to each other. More preferably, each module 40 includes a plurality of heat exchange layers 58, more preferably all layers 58 are stacked one above the other(s) in a stacking direction Z and even more preferably parallel to each other, substantially forming a plurality of parallel rows. Preferably the stacking direction Z is the vertical direction, i.e., Z and Z" are parallel to each other. Alternatively, the stacking direction Z and the vertical direction Z" can form an angle therebetween.

According to an embodiment of the invention, heat exchange layer 58 includes a single tube, having for example an elongated cross section, including two substantially parallel flat surfaces 59a, 59b. Within the tube, separators 58a are realized in order to longitudinally divide the interior of the tube in the plurality of channels 57. Such a structure is schematically depicted in the cross section of a heat exchange layer 58 of Figure 11. The cross section of the single channel 57 can be arbitrary. Each heat exchange layer 58 has a width W which depends on the number of channels which are located one adjacent to the other (see figure 9b).

Preferably, each couple of adjacent stacked channels layers 58 is connected via a plurality of fins 60. Preferably the upper surface 59a of a heat exchange layer 58 is connected via the plurality of fins 60 to the lower surface 59b of the adjacent heat exchange layer 58.

The width W of the layer 58 defines a direction Y which, together with the longitudinal direction X of channels 57, defines in turn a heat exchange layer plane (X,Y). The heat exchange layer plane (X, Y) might be, when the module 40 is mounted on the laundry dryer 1, either parallel to the horizontal plane (X", Y") defined by the laundry dryer 1 or tilted with respect to the same. Alternatively or in addition, the heat exchange layer plane (X, Y) can be perpendicular to the stacking direction Z or form an angle with the same. Moreover, each heat exchange layer 58 can also be not planar, but for example curved, e.g., having a concavity pointing either up or down along the stacking direction.

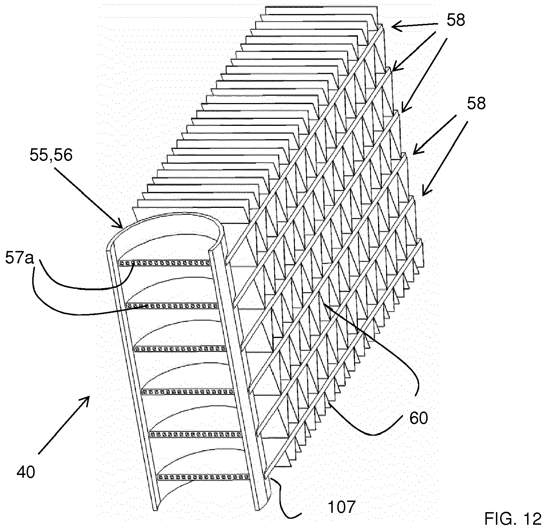

As an example, in Figure 12 a section of a header 55, 56 is represented. The header 55, 56 includes a cylindrical envelope 107 in which a plurality of holes 57a are realized, the channels 57 forming a layer 58 being inserted therein. However different configurations are possible.

The cross section of the headers 55, 56 is circular, as shown in the appended drawings, or oblong. The cross section of the header refers to the cross section of the header along a plane perpendicular to the stacking direction Z. Preferably, the oblong cross section is such that its smallest diameter, i.e., the smallest cord passing through the geometrical center of the cross section, is smaller than the width W of the layer 58.

The refrigerant R entering the module 40 via the inlet header 55 can come from the outlet header 56 of another module 40, from the compressor 24 or from the capillary tube/expansion valve 22. Additionally, the refrigerant R exiting the outlet may be directed towards the inlet header 56 of another module 40, towards the capillary tube/expansion valve 22 or towards the compressor 24. The connection between the compressor 24, modules 40 and capillary tube 22 and between modules 40 is made via piping 65, as it can be seen in figure 8. In the following figures, the flow of the refrigerant R will be indicated with a dotted line having a pointing arrow in the direction of the flow.

According to a first embodiment of the module 40 of the laundry dryer 1 of the invention depicted in Figures 9a and 9b, the two headers 55, 56 are mounted vertically (i.e. their axis Z is the vertical axis Z" of the dryer 1) on the basement 44 of the laundry dryer 1, parallel one to the other, and the channels 57 connecting the two headers 55, 56 are substantially straight along the longitudinal direction X. The stacking direction Z is parallel to the vertical direction Z". Channels 57 are divided in heat exchange layers 58, each of which includes a different tube defining upper and lower surfaces 59a, 59b within which the channels 57 are realized. A plurality of heat exchange layers 58 connects the inlet 55 to the outlet header 56, all heat exchange layers 58 having a first end 58b and a second end 58c longitudinally opposite to each other, the first end 58b being connected to the inlet header 55 and the second end 58c being connected to the outer header 56. Heat exchange layers 58 are stacked one on the other along the vertical direction Z. In addition, each heat exchange layer 58 has a width direction Y perpendicular to the longitudinal extension X of the channels 57. In the present embodiment, this width direction Y is parallel to the horizontal plane (X", Y") and to the air flow direction; i.e. the layer planes (X, Y) are horizontal (parallel to the horizontal plane (X", Y"). In other words, the module 40 is mounted so that the heat exchange layers 58 form parallel horizontal planes between which the process air flows. In each header 55, 56 in correspondence of each heat exchange layer's end 58b, 58c, a plurality of apertures 57a are realized, in each aperture 57a a channel 57 being inserted. The so-formed rows of apertures 57a (visible only in fig. 12) are parallel one to the other and perpendicular to the longitudinal extension Z of the header 55, 56.

The refrigerant R enters the inlet header 55 of module 40 via an inlet aperture 55in along a flow direction parallel to the longitudinal extension Z of header 55 and branches off into the various channels 57 via apertures 57a. The heat exchange layers 58 are "parallel" to each other according to the refrigerant flow direction. In each channel 57, the flow of the refrigerant is substantially parallel to the flow direction of the refrigerant R in the other channels 57 and has the same direction. The refrigerant R then exits the module 40 via an outlet aperture 56out of outlet header 56.

The direction of flow of refrigerant in the headers 55, 56 is perpendicular to the process air A flow. In addition, the flow of the refrigerant in the inlet header 55 is parallel to the flow of the refrigerant in the outlet header 56, but with opposite direction.

According to an additional embodiment of the module 40 of the laundry dryer 1 of the invention, depicted in Figures 10a and 10b, the module 40 includes only two headers 55, 56, the inlet and the outlet header. In this case, the headers are lying on the horizontal plane (X, Y) and more preferably are disposed along the air flow direction Y. In addition, not all layers are connected to both inlet and outlet headers 55, 56, on the contrary only the topmost and the lowermost layers are connected to the inlet and the outlet layer, respectively. All other layers 58 have their ends 58b, 58c connected to their adjacent layers, e.g. one end to their lower and one end to their upper layer. Thus, the various layers 58 are substantially formed by a single channels' tube bending on itself several times in order to form the stacked layers. Being the inlet and the outlet headers 55, 56 disposed within the basement 44 substantially parallel to the drying air flow direction Y, also the resulting refrigerant flow within the headers is parallel to horizontal plane (X", Y"). However, the inlet and outlet headers 55, 56 are located within the basement 44 at different height along the vertical direction Z", so the plurality of layers 58 all formed by the single tube are stacked one above the other in a stacking direction Z which still corresponds to the vertical direction Z". Channels layers 58 are parallel to each other and their longitudinal extension X is perpendicular to the process air flow direction Y. The single tube within which the various channels 57 are realized has a first rectilinear portion 58e defining the first channels layer connected to the inlet header 55 via one of its ends 58b, it then includes a U-shaped bend 58f and it extends for a second rectilinear portion 58g parallel to the first rectilinear portion 58e defining the second channels layer, and so on, till the last rectilinear portion 58z forming the last layer, which is connected by one of its ends 58c to the outlet header 56. In this way, a single row of apertures 57a is formed in each header 55, 56 and the flow of refrigerant in the various layers 58 can be considered in series with respect to the refrigerant flow. The flows of refrigerant within the various channels 57 forming the channels layers are parallel to each other. Additionally, the channels layer planes (X, Y) are parallel to the horizontal plane (X", Y").

The flows of the refrigerant R in the inlet and outlet headers 55, 56 are preferably parallel to each other. The two flows can have the same direction, or opposite directions.

Preferably, the channels 57 above described of both embodiments are cylindrical tubes, i.e. have a circular cross section. Advantageously, said channels 57 have a hydraulic diameter DH smaller or equal than 5 mm, i.e. DH ≤ 5.

Nevertheless, the channels 57 may have different shape with different cross section shape. Accordingly, the hydraulic diameter DH of each of the channel, where the hydraulic diameter DH is defined as

$$DH = 4*A/P$$

where A is the cross sectional area of the channel and P is the wetted perimeter of the cross-section of the channel 57, is smaller or equal than 5 mm, i.e. DH ≤ 5 mm, more preferably DH ≤ 3 mm, even more preferably DH ≤ 1 mm.

It has thus been shown that the present invention allows the set objects to be achieved. In particular, it makes it possible to obtain a heat pump laundry dryer which improves the efficiency of the drying process and limits the size of the heat pump components.

**Claims**

1. Laundry dryer (1) of the type comprising a heat pump system (20) having a refrigerant circuit (30) for a refrigerant (R) and comprising a process air circuit (10) in communication with a laundry container (9) suited for receiving laundry to be dried using process air (A), said refrigerant circuit (30) comprising:

   a central processing unit,
   a refrigerant (R),
   a first heat exchanger (21) for heating said process air (A) and cooling said refrigerant (R), said first heat exchanger (21) comprising a heat exchanger outlet (28) for expelling the heated process air (A) for said laundry container (9);
   a second heat exchanger (23) for cooling said process air (A) and heating said refrigerant (R);
   a refrigerant expansion device (22) arranged in said refrigerant circuit (30) between said first heat exchanger (21) and said second heat exchanger (23); and
   a rotary or a scroll compressor (24) arranged in said refrigerant circuit (30) between said second heat exchanger (23) and said first heat exchanger (21), said compressor (24) comprising a compressor chamber (260) and a compressor inlet (24a) where said refrigerant (R) is sucked for said compressor chamber (260),

**characterized in that**

the product of the volume (Vd) of said compressor chamber (260) and the refrigerant density (RDS) at said compressor inlet (24a) in steady state condition of said heat pump system (20) is comprised between 40 $cm^3*kg/m^3$ and 250 $cm^3*kg/m^3$;

wherein the refrigerant density (RDS) is calculated using the refrigerant temperature detected at the compressor inlet (24a) and/or the refrigerant pressure detected at the compressor inlet (24a) and/or at the evaporator inlet 23a;

wherein the correlation between the refrigerant density (RDS) and the detected values are stored as a function or as a table in a memory of the central processing unit; and

wherein said steady state condition is a state condition reached by said heat pump system (20) after a period of time (t1-t0) from its activation when thermodynamic conditions are substantially stable over time.

2. The laundry dryer (1) of claim 1, wherein said product of the compressor chamber volume (Vd) and the refrigerant density (RDS) at said compressor inlet (24a) is preferably comprised between 60 $cm^3*kg/m^3$ and 250 $cm^3*kg/m^3$, more preferably comprised between 100 $cm^3*kg/m^3$ and 250 $cm^3*kg/m^3$.

3. The laundry dryer (1) of claim 1 or 2, wherein said compressor chamber volume (Vd) is comprised between 4 $cm^3$ and 24 $cm^3$, preferably comprised between 5 $cm^3$ and 16 $cm^3$, more preferably comprised between 6 $cm^3$ and 14 $cm^3$.

4. The laundry dryer (1) of any one of the preceding claims, wherein said refrigerant density (RDS) at said compressor inlet (24a) in said steady state condition is comprised between 6 $kg/m^3$ and 40 $kg/m^3$, preferably comprised between 10 $kg/m^3$ and 25 $kg/m^3$.

5. The laundry dryer (1) of claim 1, wherein in said steady state condition the refrigerant condensing temperature (TC) at said first heat exchanger (21) is maintained within a range of 7,5°C around a target temperature, more preferably within a range of 5°C around a target temperature, and/or the refrigerant evaporation temperature (TV) at said second heat exchanger (23) is maintained within a range of 7,5°C around a target temperature, more preferably within a range of 5°C around a target temperature, and/or the process air temperature (TA) at said first heat exchanger outlet (28) is maintained within a range of 7,5°C around a target temperature, more preferably within a range of 5°C around a target temperature.

6. The laundry dryer (1) of claim 5, wherein said target temperature for said process air temperature (TA) at said first heat exchanger outlet (28) is set between 50°C and 70°C.

7. The laundry dryer (1) of claim 5 or 6, wherein said target temperature for said refrigerant evaporation temperature (TV) at said second heat exchanger (23) is set between 15°C and 25°C.

8. The laundry dryer (1) of any one of the claims 5 to 7, wherein said target temperature for said refrigerant condensation temperature (TC) at said first heat exchanger (21) is set between 50°C and 70°C.

9. The laundry dryer (1) of any one of the preceding claims, wherein said process air circuit (10) is a closed-loop process air circuit (10).

10. The laundry dryer (1) of any one of the preceding claims, wherein said compressor (24) is driven at a variable rotational speed.

11. The laundry dryer (1) of claim 10, wherein said steady state condition is obtained and/or maintained upon variation of the rotational speed of said compressor.

12. The laundry dryer (1) of any one of the preceding claims, wherein said compressor is a rotary compressor, more preferably a rolling-piston compressor.

13. The laundry dryer (1) of any one of the preceding claims, wherein said heat pump system (20) further comprises a cooling fan unit (70) for said compressor (24).

14. The laundry dryer (1) of claim 13, wherein said cooling fan unit (70) is activated at said steady state condition.

15. The laundry dryer (1) of claim 13, wherein said steady state condition is obtained and/or maintained upon activation of said cooling fan unit (70).

**Patentansprüche**

1. Wäschetrockner (1) vom Typ umfassend ein Wärmepumpensystem (20) mit Kältemittelkreislauf (30) für ein Kältemittel (R) und umfassend einen Prozessluftkreislauf (10) in Verbindung mit einem Wäschebehälter (9), der zum Aufnehmen von unter Verwendung von Prozessluft (A) zu trocknender Wäsche geeignet ist, wobei der Kältemittelkreislauf (30) umfasst:

eine zentrale Verarbeitungseinheit,
ein Kältemittel (R),
einen ersten Wärmetauscher (21) zum Erwärmen der Prozessluft (A) und Kühlen des Kältemittels (R), wobei der erste Wärmetauscher (21) einen Wärmetauscherauslass (28) zum Ausstoßen der erwärmten Prozessluft (A) für den Wäschebehälter (9) umfasst;
einen zweiten Wärmetauscher (23) zum Kühlen der Prozessluft (A) und zum Erwärmen des Kältemittels (R);
eine Kältemittelexpansionsvorrichtung (22), die in dem Kältemittelkreislauf (30) zwischen dem ersten Wärmetauscher (21) und dem zweiten Wärmetauscher (23) angeordnet ist; und
einen Rotations- oder einen Scrollkompressor (24), der in dem Kältemittelkreislauf (30) zwischen dem zweiten Wärmetauscher (23) und dem ersten Wärmetauscher (21) angeordnet ist, wobei der Kompressor (24) eine Kompressorkammer (260) und einen Kompressoreinlass (24a) umfasst, in den das Kältemittel (R) für die Kompressorkammer (260) angesaugt wird,
**dadurch gekennzeichnet, dass**
das Produkt des Volumens (Vd) der Kompressorkammer (260) und der Kältemitteldichte (RDS) an dem Kompressoreinlass (24a) in einem stationären Zustand des Wärmepumpensystems (20) zwischen 40 $cm^3*kg/m^3$ und 250 $cm^3*kg/m^3$ liegt;
wobei die Kältemitteldichte (RDS) anhand der an dem Kompressoreinlass (24a) detektierten Kältemitteltemperatur und/oder dem an dem Kompressoreinlass (24a) und/oder an dem Verdampfereinlass (23a) detektierten Kältemitteldruck berechnet ist;
wobei die Korrelation zwischen der Kältemitteldichte (RDS) und den detektierten Werten als eine Funktion oder als eine Tabelle in einem Speicher der zentralen Verarbeitungseinheit gespeichert ist; und
wobei der stationäre Zustand ein Zustand ist, der durch das Wärmepumpensystem (20) nach einer Dauer von Zeit (t1-t0) ab seiner Aktivierung erreicht wird, wenn thermodynamische Bedingungen im Zeitverlauf im Wesentlichen stabil sind.

2. Wäschetrockner (1) nach Anspruch 1, wobei das Produkt des Kompressorkammervolumens (Vd) und der Kältemitteldichte (RDS) an dem Kompressoreinlass (24a) vorzugsweise zwischen 60 $cm^3*kg/m^3$ und 250 $cm^3*kg/m^3$, weiter bevorzugt zwischen 100 $cm^3*kg/m^3$ und 250 $cm^3*kg/m^3$ liegt.

3. Wäschetrockner (1) nach Anspruch 1 oder 2, wobei das Kompressorkammervolumen (Vd) zwischen 4 $cm^3$ und 24 $cm^3$, vorzugsweise zwischen 5 $cm^3$ und 16 $cm^3$, weiter bevorzugt zwischen 6 $cm^3$ und 14 $cm^3$ liegt.

4. Wäschetrockner (1) nach einem der vorhergehenden Ansprüche, wobei die Kältemitteldichte (RDS) an dem Kompressoreinlass (24a) in dem stationären Zustand zwischen 6 $kg/m^3$ und 40 $kg/m^3$, vorzugsweise zwischen 10 $kg/m^3$ und 25 $kg/m^3$ liegt.

5. Wäschetrockner (1) nach Anspruch 1, wobei in dem stationären Zustand die Kältemittelkondensationstemperatur (TC) an dem ersten Wärmetauscher (21) in einem Bereich von 7,5 °C um eine Solltemperatur, weiter bevorzugt in einem Bereich von 5 °C um eine Solltemperatur gehalten ist, und/oder die Kältemittelverdampfungstemperatur (TV) an dem zweiten Wärmetauscher (23) in einem Bereich von 7,5 °C um eine Solltemperatur, weiter bevorzugt in einem Bereich von 5 °C um eine Solltemperatur gehalten ist, und/oder die Prozesslufttemperatur (TA) an dem ersten Wärmetauscherauslass (28) in einem Bereich von 7,5 °C um eine Solltemperatur, weiter bevorzugt in einem Bereich von 5 °C um eine Solltemperatur gehalten ist.

6. Wäschetrockner (1) nach Anspruch 5, wobei die Solltemperatur für die Prozesslufttemperatur (TA) an dem ersten Wärmetauscherauslass (28) zwischen 50 °C und 70 °C eingestellt ist.

7. Wäschetrockner (1) nach Anspruch 5 oder 6, wobei die Solltemperatur für die Kältemittelverdampfungstemperatur (TV) an dem zweiten Wärmetauscher (23) zwischen 15 °C und 25 °C eingestellt ist.

8. Wäschetrockner (1) nach einem der Ansprüche 5 bis 7, wobei die Solltemperatur für die Kältemittelkondensationstemperatur (TC) an dem ersten Wärmetauscher (21) zwischen 50 °C und 70 °C eingestellt ist.

9. Wäschetrockner (1) nach einem der vorhergehenden Ansprüche, wobei der Prozessluftkreislauf (10) ein geschlossener Prozessluftkreislauf (10) ist.

10. Wäschetrockner (1) nach einem der vorhergehenden Ansprüche, wobei der Kompressor (24) bei einer veränderlichen Drehzahl angetrieben ist.

11. Wäschetrockner (1) nach Anspruch 10, wobei der stationäre Zustand bei Veränderung der Drehzahl des Kompressors erreicht und/oder aufrechterhalten ist.

12. Wäschetrockner (1) nach einem der vorhergehenden Ansprüche, wobei der Kompressor ein Rotationskompressor, weiter bevorzugt ein Wälzkolbenkompressor, ist.

13. Wäschetrockner (1) nach einem der vorhergehenden Ansprüche, wobei das Wärmepumpensystem (20) ferner eine Kühlerlüftereinheit (70) für den Kompressor (24) umfasst.

14. Wäschetrockner (1) nach Anspruch 13, wobei die Kühlerlüftereinheit (70) in dem stationären Zustand aktiviert ist.

15. Wäschetrockner (1) nach Anspruch 13, wobei der stationäre Zustand bei Aktivierung der Kühlerlüftereinheit (70) erreicht und/oder aufrechterhalten ist.

**Revendications**

1. Sèche-linge (1) du type comprenant un système de pompe à chaleur (20) ayant un circuit de réfrigérant (30) pour un réfrigérant (R) et comprenant un circuit d'air de traitement (10) en communication avec un contenant de linge (9) approprié pour la réception de linge destiné à être séché en utilisant de l'air de traitement (A), ledit circuit de réfrigérant (30) comprenant :

une unité centrale de traitement,
un réfrigérant (R),
un premier échangeur de chaleur (21) pour chauffer ledit air de traitement (A) et refroidir ledit réfrigérant (R), ledit premier échangeur de chaleur (21) comprenant une sortie d'échangeur de chaleur (28) pour expulser l'air de traitement chauffé (A) pour ledit contenant de linge (9) ;
un second échangeur de chaleur (23) pour refroidir ledit air de traitement (A) et chauffer ledit réfrigérant (R) ;
un dispositif de dilatation de réfrigérant (22) agencé dans ledit circuit de réfrigérant (30) entre ledit premier échangeur de chaleur (21) et ledit second échangeur de chaleur (23) ; et
un compresseur rotatif ou à volute (24) agencé dans ledit circuit de réfrigérant (30) entre ledit second échangeur de chaleur (23) et ledit premier échangeur de chaleur (21), ledit compresseur (24) comprenant une chambre de compresseur (260) et une entrée de compresseur (24a) où ledit réfrigérant (R) est aspiré pour ladite chambre de compresseur (260),
**caractérisé en ce que**
le produit du volume (Vd) de ladite chambre de compresseur (260) et de la densité de réfrigérant (RDS) à ladite entrée de compresseur (24a) en condition de régime permanent dudit système de pompe à chaleur (20) est compris entre 40 cm³*kg/m³ et 250 cm³*kg/m³ ;
dans lequel la densité de réfrigérant (RDS) est calculée en utilisant la température de réfrigérant détectée à l'entrée de compresseur (24a) et/ou la pression de réfrigérant détectée à l'entrée de compresseur (24a) et/ou à l'entrée d'évaporateur (23a) ;
dans lequel la corrélation entre la densité de réfrigérant (RDS) et les valeurs détectées est stockée sous forme de fonction ou sous forme de table dans une mémoire de l'unité centrale de traitement ; et
dans lequel ladite condition de régime permanent est une condition d'état atteinte par ledit système de pompe à chaleur (20) après une période (t1-t0) depuis son activation lorsque des conditions thermodynamiques sont sensiblement stables au fil du temps.

2. Sèche-linge (1) selon la revendication 1, dans lequel ledit produit du volume de chambre de compresseur (Vd) et de la densité de réfrigérant (RDS) à ladite entrée de compresseur (24a) est de préférence compris entre 60 cm³*kg/m³ et 250 cm³*kg/m³, mieux encore compris entre 100 cm³*kg/m³ et 250 cm³*kg/m³.

3. Sèche-linge (1) selon la revendication 1 ou 2, dans lequel ledit volume de chambre de compresseur (Vd) est compris entre 4 cm³ et 24 cm³, de préférence compris entre 5 cm³ et 16 cm³, mieux encore compris entre 6 cm³ et 14 cm³.

4. Sèche-linge (1) selon l'une quelconque des revendications précédentes, dans lequel ladite densité de réfrigérant (RDS) à ladite entrée de compresseur (24a) dans ladite condition de régime permanent est comprise entre 6 kg/m³ et 40 kg/m³, de préférence comprise entre 10 kg/m³ et 25 kg/m³.

5. Sèche-linge (1) selon la revendication 1, dans lequel, dans ladite condition de régime permanent, la température de condensation de réfrigérant (TC) audit premier échangeur de chaleur (21) est maintenue au sein d'une plage de 7,5°C autour d'une température cible, mieux encore au sein d'une plage de 5°C autour d'une température cible, et/ou la température d'évaporation de réfrigérant (TV) audit second échangeur de chaleur (23) est maintenue au sein d'une plage de 7,5°C autour d'une température cible, mieux encore au sein d'une plage de 5°C autour d'une température cible, et/ou la température d'air de traitement (TA) à ladite première sortie d'échangeur de chaleur (28) est maintenue au sein d'une plage de 7,5°C autour d'une température cible, mieux encore au sein d'une plage de 5°C autour d'une température cible.

**6.** Sèche-linge (1) selon la revendication 5, dans lequel ladite température cible pour ladite température d'air de traitement (TA) à ladite première sortie d'échangeur de chaleur (28) est réglée entre 50°C et 70°C.

**7.** Sèche-linge (1) selon la revendication 5 ou 6, dans lequel ladite température cible pour ladite température d'évaporation de réfrigérant (TV) audit second échangeur de chaleur (23) est réglée entre 15°C et 25°C.

**8.** Sèche-linge (1) selon l'une quelconque des revendications 5 à 7, dans lequel ladite température cible pour ladite température de condensation de réfrigérant (TC) audit premier échangeur de chaleur (21) est réglée entre 50°C et 70°C.

**9.** Sèche-linge (1) selon l'une quelconque des revendications précédentes, dans lequel ledit circuit d'air de traitement (10) est un circuit d'air de traitement en boucle fermée (10).

**10.** Sèche-linge (1) selon l'une quelconque des revendications précédentes, dans lequel ledit compresseur (24) est entraîné à une vitesse de rotation variable.

**11.** Sèche-linge (1) selon la revendication 10, dans lequel ladite condition de régime permanent est obtenue et/ou maintenue lors de la variation de la vitesse de rotation dudit compresseur.

**12.** Sèche-linge (1) selon l'une quelconque des revendications précédentes, dans lequel ledit compresseur est un compresseur rotatif, mieux encore un compresseur à piston rotatif.

**13.** Sèche-linge (1) selon l'une quelconque des revendications précédentes, dans lequel ledit système de pompe à chaleur (20) comprend en outre une unité à ventilateur de refroidissement (70) pour ledit compresseur (24).

**14.** Sèche-linge (1) selon la revendication 13, dans lequel ladite unité à ventilateur de refroidissement (70) est activée à ladite condition de régime permanent.

**15.** Sèche-linge (1) selon la revendication 13, dans lequel ladite condition de régime permanent est obtenue et/ou maintenue lors de l'activation de ladite unité à ventilateur de refroidissement (70).

FIG. 1

FIG. 2

FIG. 3

FIG. 4

FIG. 5

FIG. 6

FIG. 7

EP 3 143 190 B1

FIG. 8

FIG. 9a

FIG. 9b

FIG. 10a

FIG. 10b

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013144780 A1
- EP 2690213 A1
- EP 455526 A1